# DEMANDE DE BREVET EUROPEEN

(11) **EP 1 104 220 A1**
(43) Date de publication de la demande: **30.05.2001**
(21) Numéro de dépôt: 00403177.9
(22) Date de dépôt: 15.11.2000
(51) Int. Cl.: H04Q 11/04

(54) **Procédé de transmission de flux de données sur un réseau ATM, et dispositif pour la mise en oeuvre du procédé**

(30) Priorité: 23.11.1999 FR 9914722
(71) Demandeur: FRANCE TELECOM, 75015 Paris (FR)
(72) Inventeur: Dugeon, Olivier, 22560 Pleumeur Bodou (FR); Guillemin, Fabrice, 22560 Pleumeur Bodou (FR); Mangin, Christophe, 35310 Breal sous Montfort (FR)
(74) Mandataire: Loisel, Bertrand

(57) **Abrégé**

Des flux de données, générés selon un protocole en mode connecté et formatés en paquets selon un protocole en mode non-connecté, sont transmis par l'intermédiaire d'un réseau ATM. On attribue au préalable un ensemble de circuits virtuels du réseau ATM à chaque couple de points d'accès du réseau ATM, sans leur affecter de ressources de débit. A réception par un point d'accès d'une requête d'ouverture de connexion, formulée selon le protocole en mode connecté, entre une adresse de source et une adresse de destination accessible par un autre point d'accès du réseau ATM, on sélectionne un circuit virtuel disponible dans l'ensemble attribué à ce couple de points d'accès, et on émet sur le circuit virtuel sélectionné une cellule de gestion de ressources contenant un message de demande d'activation du circuit virtuel. A réception de cette cellule par un noeud du réseau ATM se trouvant sur le circuit virtuel sélectionné, une ressource de débit est affectée, si elle est disponible, au circuit virtuel sélectionné.

## Description

La présente invention concerne les transmissions, sur des réseaux ATM (« Asynchronous Transfer Mode »), de flux de données générés selon un protocole de transport en mode connecté et formatés en paquets selon un protocole de réseau en mode non-connecté. Dans une application particulière, le protocole de transport TCP (« Transmission Control Protocol ») et le protocole de réseau IP (« Internet Protocol ») sont considérés.

Ces dernières années ont vu l'explosion commerciale de l'Internet, aussi bien dans le domaine grand public avec l'accès à Internet à partir d'ordinateurs résidentiels, que dans celui des offres de télécommunications professionnelles. Par ailleurs, de plus en plus d'applications apparaissant sur les réseaux Internet ont des exigences strictes en termes de débit et de qualité de service (QoS, « *Quality of Service* »).

Conçus à l'origine sans aucune préoccupation vis-à-vis de la qualité de service et orientés principalement vers la transmission de données, les protocoles du réseau Internet, IP en particulier, sont fondés sur des principes simples et robustes d'acheminement des paquets, au prix cependant d'opérations coûteuses en temps et en capacité de traitement logiciel, pouvant entraîner des phénomènes de goulot d'étranglement. Il en résulte que le service de réseau offert par l'Internet est dit « best effort », c'est-à-dire que le réseau transfère les informations au mieux de ses capacités et sans aucune garantie, ni en termes de perte d'information, ni en termes de retard de transfert. C'est ensuite à la charge des applications et des protocoles implantés dans les équipements des utilisateurs de rétablir l'intégrité des données transférées.

Parmi ces protocoles, TCP est le plus répandu actuellement puisqu'il est utilisé comme protocole de transport pour les échanges liés au courrier électronique (SMTP, « Simple Mail Transfer Protocol »), aux transferts de fichiers (FTP, « File Transfer Protocol »), aux transactions Web (HTTP, « HyperText Transfer Protocol »), etc. Malgré la sécurisation qu'il apporte à travers les mécanismes de retransmission et de contrôle de flux, TCP ne garantit pas la qualité du service rendu aux applications en termes de débit utilisable et de temps de transfert, ces paramètres restant très dépendants de l'état du réseau au niveau de la couche IP. Cette situation est due au fait que les mécanismes mis en oeuvre par TCP n'interviennent que dans les terminaux et n'exploitent aucune information explicite sur les ressources disponibles dans le réseau. Plus précisément, les contrôles de flux et de congestion de TCP considèrent le réseau comme une boîte noire et réagissent à la détection de perte de paquets effectuée au niveau des terminaux, ce qui conduit à une dégradation importante des performances des applications. Par exemple, lors du transfert d'images fixes faisant partie d'une page Web, ces dégradations entraînent un inconfort d'utilisation (affichage par saccades, attente, blocage définitif, ... ) reflétant de manière tangible le niveau de qualité de service rendu par le réseau.

Plusieurs solutions sont à l'étude pour améliorer à la fois les débits accessibles et la qualité de service pour le trafic Internet, et TCP en particulier. On peut schématiquement distinguer deux grandes voies pour la montée en débit:
- les réseaux « tout IP », qui sont des extensions des réseaux IP actuels, avec des routeurs munis de capacités de relayage de paquets à haute vitesse (gigarouteurs), interconnectés par des artères de transmission à très haut débit, du type SDH (« *Synchronous Digital Hierarchy* ») ou WDM (« *Wavelength Division Multiplexing* »). Plusieurs techniques peuvent être utilisées pour constituer de tels routeurs, par exemple par une parallélisation du moteur de relayage de paquets à l'intérieur des routeurs, ou par un système de commutation d'étiquettes (solution « *MultiProtocol Label Switching* », *ou* MLPS, de l'IETF) afin de courtcircuiter l'analyse des adresses paquet par paquet ;
- les réseaux IP utilisant la technique ATM comme coeur de commutation. Le réseau ATM peut être utilisé directement pour transporter le trafic IP, ou encore en introduisant un couplage entre ATM et IP pour restaurer la notion de connexion (dans un sens plus ou moins strict) dans IP, par exemple en utilisant la technique MPLS (« *MultiProtocol Label Switching* ») appliquée à l'ATM.

Vis-à-vis de la qualité de service, on peut également envisager deux approches. La première consiste à améliorer la qualité de service de manière différentielle d'un service par rapport à un autre, sans pour autant pouvoir garantir contractuellement des objectifs à un utilisateur. Ce principe est étudié par le groupe DiffServ de l'IETF. La deuxième approche, à l'opposé, est de garantir des objectifs de qualité de service.

Plusieurs techniques ont été introduites pour le transport du trafic TCP sur un réseau ATM :
1) Transport du trafic Internet par un réseau ATM équipé de fonctions MPLS. Des connexions ATM (circuits ou conduits virtuels) sont créées par les fonctions MPLS. Les segments TCP (encapsulés dans des paquets IP) sont orientés à l'accès du réseau par le routeur de périphérie MPLS vers l'une ou l'autre des connexions ATM établies suivant l'adresse IP destinataire. Plusieurs connexions TCP peuvent être regroupées sur un même circuit virtuel (« VC »). De plus, plusieurs circuits virtuels en entrée d'un élément de réseau peuvent être fusionnés vers un même circuit de sortie (« *VC merging* »). Le problème majeur de MPLS dans sa version actuelle est son manque d'outils en termes de gestion de trafic. Les flux manipulés par MPLS sont de type UBR (« *Unspecified Bit Rate* ») et donc sans qualité de service. Des efforts sont menés actuellement pour combiner les approches MPLS et DiffServ. Ceci peut être résolu simplement en introduisant des mécanismes de priorité entre flux dans les ports de sortie des commutateurs/routeurs. Des produits commerciaux, tels « *PacketStar* » de la société Lucent, proposent d'ores et déjà ce type d'approche.
2) Transport du trafic TCP par des capacités de transfert ATM génériques, à savoir:
   - SBR : « *Statistical Bit Rate* », connu également sous le nom de service « *Variable Bit Rate* » (VBR) à l'ATM Forum ;
   - ABR: « *Available Bit Rate* » ;
   - UBR: « *Unspecified Bit Rate* », avec éventuellement des mécanismes de destruction sélective de paquets (EPD, « *Early Packet Discard* », ou PPD, « Partial Packet Discard ») ;
   - GFR: Guaranteed Frame Rate ».
   Des paramètres statistiques de trafic (par exemple le débit soutenable et la taille maximale de rafale dans le cas de la capacité SBR) sont déterminés a priori. Pour transporter le trafic TCP, on établit une connexion ATM statistique qui doit respecter le contrat de trafic prescrit. Les solutions de cette famille sont inadéquates parce que les capacités de transfert ATM génériques requièrent des paramètres de trafic fixes (débit et volume de cellules associé), alors que le mécanisme de contrôle de TCP n'utilise que les volumes d'information transférés sans prendre en compte de paramètre de débit. De plus, le volume d'information transmis par TCP dépend des conditions de trafic dans le réseau et donc d'un grand nombre de paramètres incontrôlables dans leur totalité et fluctuant au cours du temps. Il est donc difficile de déterminer des paramètres de trafic statistiques pour qualifier les flux TCP. Un choix imprécis de ces paramètres peut provoquer des pertes dans les mécanismes de police en entrée de réseau et ainsi des dégradations importantes de la qualité de transfert des flux TCP.
3) Régulation de TCP par contrôle de débit (ACK *bucket,* contrôle de taille de fenêtre). Des observations (estimation du temps de transfert) sont réalisées afin de déduire l'état de congestion du réseau et d'adapter la dynamique de TCP en régulant le renvoi des segments d'accusé de réception (« *acknowledgement* ») afin d'éviter la perte d'information dans le réseau et de caler TCP sur une valeur de débit. Cette technique s'applique même si le réseau de transport n'est pas de type ATM. Cette régulation de TCP par contrôle de débit repose sur des méthodes adaptatives et empiriques de contrôle de flux. Elles sont mises en oeuvre à la périphérie du réseau, qui reste en coeur, malgré tout, de type « *best effort* ». En particulier, il n'y a aucune réservation de ressources dans les différents noeuds du réseau, et il n'est pas possible pour le réseau de garantir contractuellement des objectifs de qualité de service.
4) Couplage de TCP avec la signalisation large bande. Quand une connexion TCP doit être établie, un message de signalisation Internet (par exemple RSVP) est émis par le terminal source et une procédure de signalisation large bande classique (suivant les protocoles Q.2931, Q.2963, etc. de l'UIT-T) est initiée par le routeur en entrée de réseau afin d'établir une connexion ATM correspondant à la connexion TCP. Malheureusement, les temps de réponse de la signalisation large bande sont trop longs pour le transport TCP, à cause du traitement logiciel des messages de signalisation (de taille variable et contenant trop d'informations non pertinentes dans le cas des flots TCP) dans les automates de signalisation et des différents protocoles de sécurisation mis en oeuvre dans l'échange des messages de signalisation (SSCOP). Il est quasiment admis aujourd'hui que la signalisation large bande est inadaptée aux transactions ayant lieu sur l'Internet.
5) Propositions de signalisation allégée. Jugeant la procédure précédente de couplage entre TCP et la signalisation large bande trop lourde et trop lente, des propositions pour simplifier les procédures de signalisation sont apparues récemment dans la littérature, en particulier, les systèmes désignés par les appellations UNITE (voir G. Hjámtýsson et al., « UNITE - An Architecture for Lightweight Signaling in ATM Networks », Proc. lnfocom'98, New York, avril 1998), OPENET, (voir I. Cidon et al. « OPENET : An Open and Efficient Control Platform for ATM Networks », Proc. lnfocom'98, New York, avril 1998) et Dynaflow (voir Q. Bian et al., « Dynamic Flow Switching - A New Communication Service for ATM Networks », Proc. lnfocom'98, New York, avril 1998).
   Dans UNITE, proposé par la société AT&T, la détection d'un flot donne lieu à une procédure de signalisation mono-cellule initialisée dans le réseau pour établir un VC ATM. L'établissement s'effectue bond par bond et inclut l'établissement de connectivité et l'allocation de ressources.
   Dans OPENET, proposé par la société Sun Microsystems, la signalisation large bande classique est utilisée entre l'utilisateur et le réseau. A l'intérieur du réseau, les routes sont établies par P-NNI, et l'activation des routes est effectuée par l'intermédiaire d'une signalisation mono-cellule.
   Dans DYNAFLOW, proposé par l'Université George Washington, les paquets IP segmentés en cellules ATM sont regroupés sous forme de datagrammes avec une cellule spécifique de gestion de ressources en tête, chargée d'aiguiller le datagramme dans le réseau et de réserver des ressources pour le datagramme.
6) Multiplexage en boucle ouverte et contrôle de congestion par des techniques de destruction sélective de paquets TCP (PPD, EPD, WRED, etc.) et des mécanismes de priorité entre classes de trafic. Sachant que TCP réagit à la perte en diminuant le volume d'information transmise, la manière la plus simple de transporter les flux TCP est de l'admettre dans le réseau sans contrôle de paramètres statistiques et de les multiplexer en boucle ouverte. Certains paquets sont alors totalement (EPD) ou partiellement (PPD) détruits en cas de débordement des mémoires tampons dans le réseau. Un raffinement est apporté en introduisant des mécanismes de priorité entre flux : certains flux peuvent être servis dans les ports de sortie des éléments de réseau plus rapidement que d'autres (« *Expedeted Forwarding* »); ou un espace mémoire plus grand peut être réservé pour certains flux afin de garantir une perte d'information plus faible (« *Assured Forwarding* »). Ces schémas de multiplexage statistique en boucle ouverte, mettant en oeuvre des mécanismes de priorité et des techniques de destruction sélective de paquets TCP, ne permettent pas de garantir des objectifs de qualité de service. Ils peuvent être utilisés pour améliorer de manière différentielle la qualité de transfert d'une classe de service par rapport à une autre, mais en aucun cas pour garantir des objectifs.

Il a été montré qu'un mécanisme d'espacement de cellules ATM pouvait être utilisé pour réguler la dynamique de TCP sur un réseau ATM (voir F. Guillemin et al., « Regulation of TCP over ATM via Cell Spacing », Proc. ITC'16, Edinburgh, juin 1999). Un tel mécanisme d'espacement peut également empêcher le débordement de mémoires tampon du réseau dans le cas du protocole en mode non connecté UDP (« User Datagram Protocol »). Sur cette base, il a été développé un protocole de signalisation allégée, appelé ASIA, qui associe à chaque transfert d'information Internet, via TCP ou UDP, un circuit virtuel ATM, de type ABT (« *ATM Block Transfer* »), dont l'établissement et la définition des ressources dans le réseau sont effectués par échange de messages mono-cellule formés de cellules de gestion de ressources RM (« *Resource Management* ») (voir J. Boyer et al., « Accelerated Signaling for the Internet over ATM (ASIA) », European Transactions on Telecommunications, 1999, Special issue on architectures, protocols and quality of service for the Internet of the future).

L'invention a pour but de garantir des objectifs (en termes de perte d'information, de bande minimale utilisable et/ou de délai de transfert) sur la qualité du transfert du trafic d'une connexion d'un protocole de transport tel que TCP/IP porté par une connexion ATM.

Il est ainsi proposé un procédé de transmission, sur un réseau ATM, de flux de données générés selon un protocole de transport en mode connecté et formatés en paquets selon un protocole de réseau en mode non-connecté, chaque paquet incluant une adresse de source et une adresse de destination. Selon l'invention, le procédé comprend les étapes suivantes :
- attribuer au préalable un ensemble de circuits virtuels du réseau ATM à chaque couple de points d'accès du réseau ATM, sans affecter de ressources de débit auxdits circuits virtuels ;
- à réception par un premier point d'accès du réseau ATM d'une requête d'ouverture de connexion, formulée selon ledit protocole en mode connecté, entre une adresse de source et une adresse de destination accessible par un second point d'accès du réseau ATM, sélectionner un circuit virtuel disponible dans l'ensemble attribué au couple formé par lesdits premier et second points d'accès du réseau ATM, et émettre sur le circuit virtuel sélectionné une cellule ATM de gestion de ressources contenant un message de demande d'activation du circuit virtuel sélectionné ;
- à réception de ladite cellule ATM de gestion de ressources par un noeud du réseau ATM se trouvant sur le circuit virtuel sélectionné, affecter une ressource de débit, si elle est disponible, au circuit virtuel sélectionné.

Les « adresses » de source et de destination précitées s'entendent au sens dudit protocole de transport en mode connecté. Dans le cas typique, mais non limitatif, où ce protocole en mode connecté est TCP/IP, ces « adresses » sont formées des couples < adresse IP, port TCP >.

A chaque connexion TCP est associé un circuit virtuel (VC) ATM pour lequel des ressources (bande passante et espace mémoire) sont réservées dans le réseau à l'aide d'une procédure de signalisation simplifiée. Ayant préalablement créé un ensemble de circuits virtuels ATM dormants (c'est-à-dire à débit nul), typiquement par les fonctions MPLS, l'établissement d'une connexion TCP (détection du segment SYN) est synchronisé avec une procédure mono-cellule d'allocation de ressources sur ces circuits virtuels. Il pourra en être de même au moment de la rupture de la connexion TCP (détection du segment FIN).

Comme des ressources sont allouées à un flot TCP dans le réseau ATM, des objectifs de qualité de service (temps de transfert, bande passante utilisable et taux de perte d'information) peuvent être garantis, et ceci de manière transparente pour TCP via la synchronisation des deux procédures d'établissement de connexion.

Les ressources de débit peuvent être affectées à deux circuits virtuels ATM distincts pour les deux sens de communication opposés entre les premier et second points d'accès. Ces circuits virtuels pourraient aussi être confondus (connexion ATM bidirectionnelle).

Le flot de cellules ATM correspondant à une connexion TCP est espacé par une technique d'espacement de cellules, par exemple du type décrit dans EP-A-0 438 009, FR-A-2 668 324 ou EP-A-0 552 121. Ceci permet d'associer simplement un débit à une connexion TCP portée par une connexion ATM, notion qui est totalement absente au niveau TCP lequel ne manipule qu'un volume d'informations.

Il est à noter que les connexions TCP pour lesquelles le procédé permet d'atteindre des objectifs de qualité de service ne représentent pas nécessairement la totalité des connexions TCP mises en oeuvre dans le réseau : certaines peuvent se contenter du mode « best effort », avec des débits limités et non garantis, pouvant même prendre des valeurs très faibles.

Le message de demande d'activation comporte de préférence une indication de ressource de débit requise pour la connexion, à moins que celle-ci puisse dans un premier temps être définie par défaut. La ressource de débit indiquée dans le message de demande d'activation peut notamment représenter un débit de référence sur la connexion. Des cellules ATM de gestion de ressources contenant des messages de réglage du débit par rapport au débit de référence sont alors émises sur le circuit virtuel sélectionné par le premier point d'accès du réseau ATM, et acquittées sur le circuit virtuel sélectionné par le second point d'accès du réseau ATM. Ces messages de réglage de débit peuvent être générés en fonction du remplissage observé dans le tampon d'espacement du point d'accès pour la connexion concernée.

Dans un mode de réalisation du procédé, l'émission de la cellule ATM de gestion de ressources contenant le message de demande d'activation est immédiatement suivie par l'émission sur le circuit virtuel sélectionné d'au moins une cellule ATM portant ladite requête d'ouverture de connexion. Ceci évite d'inclure les données d'adressage du protocole en mode connecté dans la cellule de gestion de ressources. Chaque cellule ATM suivant le message de demande d'activation sur le circuit virtuel sélectionné et portant ladite requête d'ouverture de connexion est détruite par un noeud du réseau ATM se trouvant sur le circuit virtuel sélectionné lorsque la ressource de débit à affecter au circuit virtuel sélectionné n'est pas disponible. Le point d'accès à l'origine de la demande d'activation effectue avantageusement les opérations suivantes:
- déclencher une temporisation au moment de l'émission de la cellule ATM de gestion de ressources contenant le message de demande d'activation;
- si aucun acquittement de ladite requête d'ouverture de connexion portée par au moins une cellule ATM suivant le message de demande d'activation sur le circuit virtuel sélectionné n'est reçue du second point d'accès du réseau ATM avant l'expiration de la temporisation, émettre sur le circuit virtuel sélectionné une cellule ATM de gestion de ressources contenant un message de demande de désactivation du circuit virtuel sélectionné.

La temporisation a de préférence une durée correspondant à celle d'une temporisation de retransmission prévue dans le protocole de transport en mode connecté (75 s dans le cas de TCP/IP).

Si une répétition de la requête d'ouverture de connexion est reçue par le premier point d'accès depuis l'adresse de source avant de recevoir un acquittement du second point d'accès du réseau, il réémet sur le circuit virtuel sélectionné au moins une cellule ATM portant ladite requête d'ouverture de connexion. A réception de la cellule ATM réémise par un noeud du réseau ATM ayant détruit la cellule ATM suivant le message de demande d'activation sur le circuit virtuel sélectionné et portant ladite requête d'ouverture de connexion, une ressource de débit peut de nouveau être affectée, si elle est disponible, au circuit virtuel sélectionné.

Un autre aspect de la présente invention se rapporte à un dispositif d'interface pour un point premier d'accès situé à une interface utilisateur-réseau d'un réseau ATM, pour transmettre sur ledit réseau ATM des flux de données générés selon un protocole de transport en mode connecté et formatés en paquets selon un protocole de réseau en mode non-connecté, chaque paquet incluant une adresse de source et une adresse de destination. Ce dispositif comprend:
- des moyens pour attribuer au préalable un ensemble de circuits virtuels du réseau ATM à au moins un couple formé par ledit premier point d'accès du réseau ATM et un second point d'accès du réseau ATM, sans affecter de ressources de débit auxdits circuits virtuels ;
- des moyens de sélection d'un circuit virtuel disponible dans l'ensemble attribué au couple formé par lesdits premier et second points d'accès du réseau ATM, en réponse à la réception d'une requête d'ouverture de connexion, formulée selon ledit protocole en mode connecté, entre une adresse de source et une adresse de destination accessible par le second point d'accès ;
- des moyens d'émission, sur le circuit virtuel sélectionné, d'une cellule ATM de gestion de ressources contenant un message de demande d'activation du circuit virtuel sélectionné et d'affectation de ressources de débit au circuit virtuel sélectionné.

D'autres particularités et avantages de la présente invention apparaîtront dans la description ci-après d'exemples de réalisation non limitatifs, en référence aux dessins annexés, dans lesquels:
- les figures 1 et 2 sont des diagrammes illustrant respectivement l'ouverture et la fermeture d'une connexion TCP entre deux stations ;
- la figure 3 est un schéma d'un réseau ATM auquel la présente invention est applicable ;
- le figure 4 est un schéma d'un commutateur d'accès du réseau de la figure 3, équipé de moyens pour la mise en oeuvre de l'invention ; et
- les figures 5 à 7 sont des diagrammes illustrant respectivement l'ouverture, la fermeture et l'interruption d'une connexion TCP entre deux stations, effectuées conformément à l'invention.

### Ouverture et fermeture de connexions TCP

Une connexion TCP s'établit entre un port d'une station source et un port d'une station destination. Les deux stations ont chacune une adresse IP. Chaque port affecté à une application exécutée sur une station a un numéro de port valide pour cette station. La connexion TCP est donc principalement caractérisée par un quadruplet < adresse IP source, numéro de port source, adresse IP destination, numéro de port destination >.

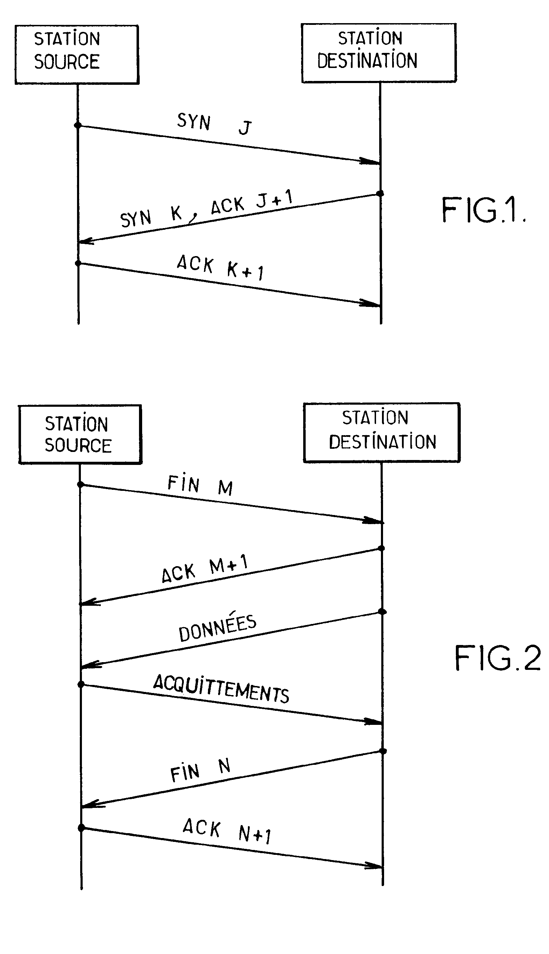

Comme spécifié dans la RFC 793 de l'IETF (« *Internet Engineering Task Force* »), l'ouverture d'une connexion TCP entre deux stations procède selon un échange de messages (ou segments) entre les ports source et destination, tel que représenté sur la figure 1. Le premier message SYN *J* (où *J* est un numéro de séquence) est une requête d'ouverture de connexion TCP. Il porte les numéros du port source (Ps) et du port destination (Pd) et est encapsulé dans un datagramme IP qui contient les adresses IP des stations source (@IPs) et destination (@IPd). L'ouverture de la connexion sur le sens source → destination est acquitté par le second message (ACK *J+1*) qui, simultanément, porte la requête d'ouverture sur le sens destination → source (SYN K). Dans ce message, les numéros Ps et Pd sont échangés ainsi que les adresses @IPs et @IPd dans le datagramme IP qui le transporte. Finalement, l'ouverture sur le sens destination → source est acquittée par le troisième message (ACK *K+1).* Pour chaque ouverture (premier et troisième messages), le protocole TCP arme une temporisation. S'il ne voit pas arriver le segment ACK au bout de cette temporisation, il renvoie un segment SYN : au bout de 6 s, puis de 24 s. Trois tentatives de connexions sont autorisées au maximum, pour une temporisation globale de 75s.

La fermeture d'une connexion TCP entre deux stations procède selon un échange de messages tel qu'illustré par la figure 2 entre les ports source et destination, l'adressage et la numérotation des ports étant identiques au cas de l'ouverture. Le premier message (FIN *M)* est une requête de fermeture de connexion TCP à l'instigation de la station source, qui effectue alors une fermeture active. La fermeture de la connexion dans le sens source → destination est acquittée par le second message (ACK *M+1).* La station destination n'initie la fermeture du sens destination → source qu'une fois qu'elle n'a plus de données à émettre (fermeture passive). Elle attend aussi le retour de l'acquittement des dernières données qu'elle a émises. Elle utilise alors la même procédure que la station source en émettant le troisième message (FIN N) ne contenant pas de données, acquitté par la station source via le dernier message (ACK *N+1).* A priori, ce dernier message n'est donc émis qu'en réponse au précédent message FIN.

### MPLS

Le but premier du groupe MPLS (« *MultiProtocol Label Switching* ») de l'IETF est de définir une technologie qui intègre les principes de commutation des circuits virtuels (analyse et traduction des en-têtes des paquets) et le routage de couche réseau. Ce groupe normalise un ensemble de protocoles de distribution et de maintenance des étiquettes dans un environnement point à point ou de diffusion, intégrant la notion de QoS et de routage contraint. Il définit aussi les procédures d'adaptation aux couches 2 existantes : Frame Relay,ATM, ...

Dans un réseau de datagrammes, tel qu'un réseau IP, lorsqu'un paquet transite d'un routeur à l'autre, ceux-ci prennent une décision de routage locale et indépendante de celle prise par leur voisin. Chaque routeur déroule l'algorithme de routage de couche 3, analyse l'en-tête des paquets reçus et, en fonctions des résultats fournis par ces deux opérations, sélectionne le bond suivant pour l'acheminement du paquet.

Le choix du bond suivant peut être alors vu comme la combinaison de deux fonctions. La première partitionne l'ensemble des paquets en classes d'équivalence de relayage (FEC: « *Forwarding Equivalence Class* »). La seconde associe à chaque FEC le bond suivant correspondant. De ce fait, des paquets appartenant à des flots différents mais à la même FEC ne sont pas distinguables. Tous les paquets d'une même FEC provenant d'un même noeud suivent alors le même chemin. Typiquement, un mécanisme de relayage IP conventionnel considère deux paquets comme appartenant à la même FEC si la table de routage du routeur traversé contient un préfixe d'adresse inclus dans l'adresse de destination de chacun des deux paquets.

Dans le cas de MPLS, l'affectation d'un paquet à une FEC est effectuée une fois pour toutes au moment où le paquet entre dans le réseau: dans le routeur de périphérie LER (« *Label Edge Router* »). La FEC à laquelle le paquet est affecté est identifiée par une étiquette *(label)* de taille réduite et fixe. Cette étiquette est intégrée au paquet avant son émission vers le premier bond. Dans les noeuds suivants, ou LSR (« *Label Switch Router* »), l'analyse de l'en-tête de couche réseau laisse la place à un mécanisme d'adressage d'une table d'aiguillage et de traduction, spécifiant le bond suivant et une nouvelle étiquette, à l'aide de l'étiquette d'entrée utilisée comme index dans cette table. Le paquet est alors réémis vers le bond suivant avec la nouvelle étiquette.

Les protocoles de routage classiques (OSPF, BGP, ... ) fournissent les informations nécessaires à l'affectation des paquets à une FEC et à la distribution des étiquettes entre les noeuds participant au réseau MPLS. D'une manière générale, les étiquettes sont distribuées de l'aval vers l'amont sur le chemin emprunté par les paquets de la FEC correspondante construisant ainsi des chemins de commutation d'étiquettes, ou LSP (« *Label Switched Path LSP* »), Un protocole de distribution d'étiquettes, appelé LDP (« *Label Distribution Protocol* »), a été défini pour permettre d'établir des chemins point à point.

Une caractéristique de MPLS est qu'un ou plusieurs flots IP peuvent être affectés à une même FEC, et par conséquent à un même LSP. Le choix de la granularité des étiquettes permet d'établir un équilibre entre partage d'une même étiquette entre plusieurs destinations et besoin de cloisonner certains flux en fonction de paramètres plus fins tout en préservant les ressources de commutation:
- routeur de sortie : tous les paquets dont la destination vise le même routeur de sortie sont transportés par un même LSP aboutissant à ce routeur. L'information spécifiant le routeur de sortie est fournie par les protocoles de routage via leur message de maintien à jour de la topologie et peut par conséquent être aussi diffusée par le protocole de distribution d'étiquettes. C'est la granularité la plus grossière ;
- préfixe IP: un préfixe est une portion d'adresse IP, généralement un sous-ensemble des bits de poids fort. Une FEC spécifiée par un préfixe IP définit un LSP sur lequel transitent tous les paquets dont l'adresse IP destination contient le préfixe ;
- flot applicatif: à l'opposé, une FEC peut être définie par un jeu de paramètres beaucoup plus détaillé, allant jusqu'à spécifier un couple d'adresses IP source et destination, un numéro de port TCP ou UDP associé à chacune de ces adresses et éventuellement le type de service transporté (TOS). Ce type de granularité revient à établir une connexion de bout en bout entre deux applications. Une telle finesse de grain ne peut être mise en oeuvre que dans des réseaux de petite taille (campus ou intranet). Pour un réseau ouvert de grande taille, une telle granularité est envisageable pour un certain nombre de flots IP avec qualité de service. Pour les autres flots, une granularité par préfixe est envisageable.

### Le protocole ASIA

Le format général de la cellule RM employé dans le protocole ASIA (voir l'article précité de J. Boyer et al.) est celui représenté dans le Tableau I, où la première colonne indique les noms des champs de la cellule selon la terminologie employée dans la Recommandation 1.371 de l'UIT-T, les seconde et troisième colonne indiquent les positions (octets et bits) de ces champs dans la cellule ATM de 53 octets, et les cases non vides de la quatrième colonne indiquent les champs faisant l'objet d'un codage particulier par rapport au codage générique de la Recommandation 1.371 de l'UIT-T.

**TABLEAU I**

| CHAMP | OCTET(s) | BIT(s) | CODAGE |
|---|---|---|---|
| ATM Header | 1-5 | tous | |
| Protocol ID | 6 | tous | ASIA |
| Message type : Direction | 7 | 8 | |
| Message type : Reset | 7 | 7 | x |
| Message type : Congestion Indication | 7 | 6 | |
| Message type : Activation | 7 | 5 | x |
| Message type : Request/Acknowledge | 7 | 4 | |
| Message type :Elastic/Rigid | 7 | 3 | |
| Message type : Renegocitation | 7 | 2 | x |
| Message type : Deactivation | 7 | 1 | x |
| CLP=0+1 ICR | 8-9 | tous | x |
| Reserved | 10-13 | tous | |
| Block size | 14-17 | tous | |
| Sequence number | 18-21 | tous | |
| Reserved | 26-51 | tous | |
| Reserved | 52 | 3-8 | |
| CRC-10 | 52 53 | 1-2 tous | |

La signification des bits de l'octet 7 de la cellule RM, donnant le type de message ASIA, est la suivante:
- Direction (bit 8): indique si la cellule RM porte sur le sens aller (0 : forward) ou sur le sens retour (1 : backward) ;
- Reset (bit 7): indique si la cellule RM transporte un message de réinitialisation correspondant au message TCP RESET (1) ou non (0);
- Congestion indication (bit 6): indique si la demande a réussi (0) ou échoué (1);
- Activation (bit 5): indique quand la cellule RM active la connexion (1);
- Request/Acknowledge (bit 4): message de requête (0) ou de confirmation (1);
- Elastic/Rigid (bit 3): indique quand le débit demandé peut être modifié par les serveurs (0). En mode rigide, si le débit demandé n'est pas disponible, ce bit positionné à 1 signifie que la requête a échoué ;
- Renegociation (bit 2): à 0 dans les phases d'établissement et de rupture de connexion, et à 1 lors des renégociations de débit ;
- Deactivation (bit 1): différencie la phase d'établissement (0) de la phase de déconnexion (1).

Le Tableau II indique les messages du protocole ASIA transmis dans les cellules RM, avec les valeurs correspondantes des bits de l'octet 7 et du débit de cellules (CR) spécifié dans les octets 8 et 9. La notation ICR (« *Initial Cell Rate* » désigne un débit initial, et A une valeur de débit modifiable en mode élastique).

**TABLEAU II**

| MESSAGE ASIA | 8 | 7 | 6 | 5 | 4 | 3 | 2 | 1 | CR |
|---|---|---|---|---|---|---|---|---|---|
| Connection Activation Request | 0 | 0 | 0 | 1 | 0 | 1 | 0 | 0 | CR |
| Connection Reset Request | 0 | 1 | 0 | 0 | 0 | 1 | 0 | 0 | 0 |
| Connection Reset Acknowledge | 1 | 1 | 0 | 0 | 1 | 1 | 0 | 0 | 0 |
| Connection Deactivation Request | 0 | 0 | 0 | 0 | 0 | 1 | 0 | 1 | 0 |
| Connection Deactivation Acknowledge | 1 | 0 | 0 | 0 | 1 | 1 | 0 | 1 | 0 |
| Elastic Bandwidth Request | 0 | 0 | 0/1 | 0 | 0 | 0 | 1 | 0 | Λ |
| Elastic Bandwidth Acknowledge | 1 | 0 | 0/1 | 0 | 1 | 0 | 1 | 0 | Λ |
| Elastic Bandwidth Confirmation | 0 | 0 | 0/1 | 0 | 1 | 0 | 1 | 0 | Λ |
| Réduction to ICR Request | 0 | 0 | 0 | 0 | 0 | 1 | 1 | 0 | CR |
| Réduction to ICR Acknowledge | 1 | 0 | 0 | 0 | 1 | 1 | 1 | 0 | CR |

Le message *Connection Activation Request* est traité comme une cellule RM de type ABT/IT (« *ABT with Intermediate Transmission* »): les données suivent immédiatement la cellule RM, tout en respectant le débit ICR. En cas d'échec de l'ouverture de la connexion, la cellule RM et les données sont détruites.

Les autres messages sont traités comme des cellules RM de type ABT/DT (« *ABT with Delayed Transmission* ») : à chaque message de requête *(...Request),* correspond un message d'accusé *(... Acknowledge).* La modification des paramètres n'est effectuée que lorsque l'accusé de réception correspondant a été correctement reçu. La modification de débit est de plus confirmée par un message supplémentaire.

### Couplage TCP / ATM

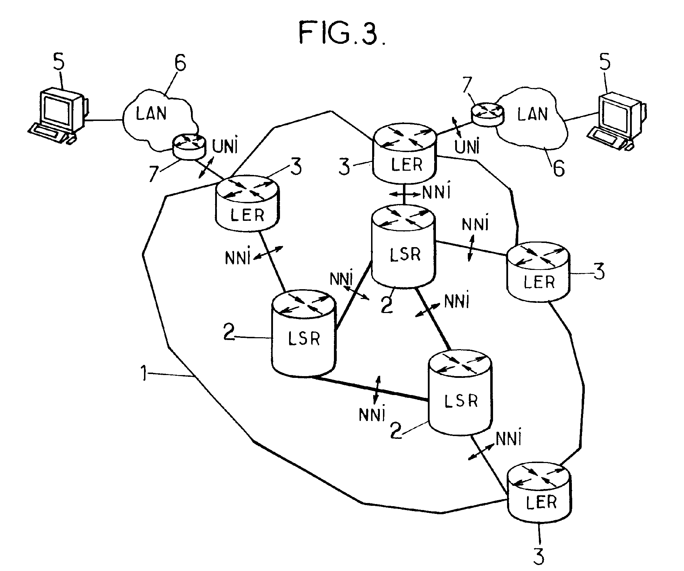

La figure 3 montre un réseau ATM agencé pour pouvoir porter du trafic IP selon le protocole ASIA, et intégrant des fonctions MPLS. Le coeur de réseau ATM 1 se compose de commutateurs interconnectés 2, formant des LSR dans l'architecture MPLS, associés à des commutateurs d'accès 3 (LER). L'interface ATM entre les commutateurs 2, 3 est de type NNI (« *Network-Network Interface* »). Les utilisateurs du réseau ATM 1 sont reliés à des LER respectifs à travers des interfaces utilisateur-réseau (UNI, « *User-Network Interface* »).

Dans l'exemple représenté sur la figure 3, deux terminaux IP 5 d'utilisateurs sont reliés au réseau 1 par l'intermédiaire de réseaux locaux 6 (LAN, « *Local Area Network* ») ayant chacun un routeur privé 7 relié à un LER 3 à travers l'interface ATM UNI.

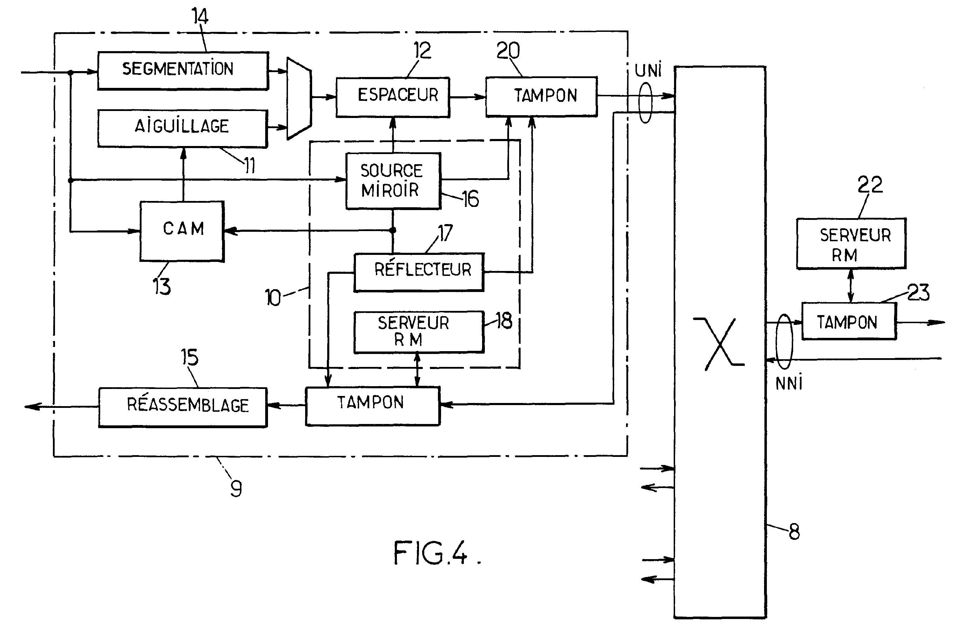

Le procédé selon l'invention se rapporte à une façon de procurer des connexions TCP entre de tels terminaux IP reliés entre eux au moyen du réseau ATM 1. Pour cela, on utilise des fonctions MPLS dont est pourvu le réseau ATM 1, notamment le protocole de distribution d'étiquettes LDP, et on équipe les LER de modules agencés comme schématisé sur la figure 4, afin d'exécuter les opérations suivantes:
- détection des segments SYN, respectivement FIN et RESET, en entrée de réseau lors de l'établissement, respectivement la rupture, d'une connexion TCP ; à ces segments spécifiques sont associées des cellules ATM de gestion de ressources (RM);
- régulation de la dynamique de TCP par espacement de cellules ATM ;
- couplage d'un flot TCP avec un VC ATM préétabli par MPLS, c'est-à-dire association des couples adresse IP / port TCP pour la source et la destination avec un identifiant du VC ATM (VPINCI, « *Virtual Path Identifier / Virtual Channel Identifier* ») réalisée sous forme d'option du protocole LDP;
- envoi de cellules RM sur le VC ATM associé à la connexion TCP pour réserver (cas d'un segment SYN) ou relâcher (segment FIN) de la bande passante pour ce VC.

Les routes ATM sont préétablies dans le réseau 1 grâce au protocole de distribution d'étiquettes LDP. Dans le cas d'un transport d'IP sur ATM, l'étiquette associée à une adresse IP est l'identifiant de la connexion ATM (VPI/VCI) qui supporte les flux dont la destination est spécifiée par cette adresse IP. A une même adresse IP peuvent être associés plusieurs VC ATM (c'est notamment le cas pour le « *VP merging* » envisagé dans l'architecture MPLS). On utilise ici la granularité « flots applicatifs » pour la détermination des FEC. Comme il n'est pas envisageable d'attribuer a priori une FEC à chaque flot applicatif IP connu, on utilise le protocole LDP pour établir un ensemble d'étiquettes, correspondant à un ensemble de VC, entre chaque paire de points d'accès des routeurs de sortie 3 du réseau (LER). Une fois la phase d'initialisation du réseau déroulée (initialisation d'OSPF et de LDP), on a un ensemble de VC dormants pour chaque paire de points d'accès LER du réseau ATM.

Le long de ces circuits virtuels ATM, seules les ressources d'aiguillage sont établies. La ressource de débit n'est allouée qu'au moment de l'établissement (appelé ici réveil) de la connexion ATM.

Les routes ATM sont bidirectionnelles. Dans l'exemple décrit ici, elles sont utilisées en mode mono-directionel vis-à-vis du flot IP transporté, sauf en ce qui concerne les messages de type « *Acknowledge* » du protocole ASIA. Leur réveil est effectué à l'aide de messages de signalisation ATM allégée, véhiculés par des cellules RM, de façon synchronisée avec la procédure d'ouverture d'une connexion TCP (segment SYN).

Le protocole ASIA reproduit le comportement du protocole TCP pour les phases de connexion et de déconnexion. Les messages ASIA précèdent les messages TCP, sans introduire d'aller-retour supplémentaires dans le réseau lors de la phase d'établissement de la connexion.

En référence à la figure 4, chaque interface UNI du commutateur ATM 8 d'un LER 3 est équipée d'un dispositif 9 comprenant un module 10 de gestion du protocole ASIA, un module d'aiguillage 11 destiné à insérer les VPI/VCI adéquats dans les cellules ATM transportant les flux TCP issus des utilisateurs raccordés via cette interface, et un espaceur 12 pour réaliser l'espacement des cellules ATM émises par chaque source (port TCP) sur un VC donné. Le module d'aiguillage 11 fonctionne avec une mémoire associative 13 permettant de retrouver le VPI/VCI à partir du quadruplet <@IPd, Pd, @IPs, Ps> extrait des segments TCP reçus. Dans l'exemple représenté à titre d'illustration, le dispositif 9 comporte en outre des modules de segmentation 14 et de réassemblage 15 pour respectivement encapsuler et désencapsuler les segments TCP dans les cellules ATM transmises sur le réseau 1 (adaptation AAL 5). Si l'adaptation est effectuée ailleurs, par exemple dans les routeurs privés 7, les fonctions de segmentation et de réassemblage ne sont pas nécessaires, une traduction de VPINCI suffisant pour chaque sens de communication.

Fonctionnellement, le module de gestion ASIA 10 se compose d'une « source miroir » 16 pour le sens montant (en entrée du commutateur ATM 8), et d'un « réflecteur » 17 associé à un « serveur RM » 18 pour le sens descendant (en sortie du commutateur ATM 8). La référence 20 désigne une mémoire tampon d'émission de cellules vers le commutateur 8, dans laquelle sont écrites les cellules espacées relativement aux connexions actives ainsi que les cellules RM issues de la source miroir 16 et du réflecteur 17 du module 10. La référence 21 désigne une mémoire tampon de réception de cellules depuis le commutateur 8, à laquelle le réflecteur 17 et le serveur RM 18 du module 10 ont accès pour la gestion du protocole ASIA.

En outre, l'interface NNI du commutateur 8 est équipée d'un serveur RM 22 contrôlant une mémoire tampon 23 d'émission de cellules vers le noeud suivant du réseau 1. Des serveurs RM semblables sont prévus dans le sens sortant aux interfaces NNI de chacun des LSR 2, afin de superviser le trafic sur les liens du coeur de réseau.

En termes d'implémentation, le dispositif 9 placé à chaque interface UNI peut être réalisé avec un processeur de traitement de cellules tel que disponible chez les fabricants de circuits, par exemple « ATMizerII+ » commercialisé par LSI Logic, « PowerQUIC II » commercialisé par Motorola, ou « MXT 4400 » commercialisé par Maker Inc. Chacun de ces processeurs est doté de mécanismes permettant d'effectuer l'espacement de cellules ATM, le traitement de cellules RM, et le cas échéant la segmentation et le réassemblage. Outre les habituelles mémoires de contexte et de stockage des cellules, il lui est adjoint une mémoire associative (CAM) 13 permettant de retrouver le VPI/VCI à partir du quadruplet <@IPd, Pd, @IPs, Ps>. Cette mémoire 13 permet également de réaliser le couplage lors de la réception du quadruplet porté par le segment SYN+ACK en provenance de la station de destination. Son contenu est régulièrement mis à jour par le protocole de distribution d'étiquettes LDP.

Pour gérer la mémoire 13, le processeur peut mettre en oeuvre un mécanisme de type « *forwarding* » fondé sur un algorithme de « *longest match* *prefix* », permettant de retrouver le VPI/VCI à partir du quadruplet <@IPd, @IPs, Pd, Ps>. Un exemple d'un tel mécanisme appliqué à une mémoire associative de type TRIE est décrit dans la demande de brevet européen N° 99402302.6. Dans un mode de réalisation particulier, les VC réveillés sont affectés aux préfixes pris en compte dans la mémoire 13 avec une longueur égale au nombre de bits (96) du quadruplet <@IPd, @IPs, Pd, Ps>, alors que les ensembles de VC dormants sont affectés aux préfixes pris en compte dans la mémoire 13 avec une longueur plus petite que 96 bits mais au moins égale à 80 bits (80 bits correspondent au triplet <@IPd, @IPs, Pd>, cette valeur convenant lorsque le protocole de transport est TCP puisque le dispositif 9 ne peut généralement pas connaître a priori le numéro de port TCP qui sera utilisé par une source donnée), la concordance avec un préfixe de moins de 80 bits donnant lieu à une connexion sans QoS. Dans ce cas, le fait d'observer une concordance sur au moins 80 bits avec le quadruplet lu dans l'en-tête d'un paquet IP signifie que ce paquet se rapporte à une connexion avec qualité de service.

En outre, le processeur du dispositif d'interface 9 intègre des fonctions MPLS afin de coopérer avec les entités du réseau 1. En particulier, ceci permet de mettre en oeuvre le protocole LDP lors de la configuration du réseau pour procéder à la réservation des VC ATM et fournir ainsi les ensembles de VC dormants qui pourront être réveillés pour supporter les connexions TCP.

### Réveil d'un VC ATM à l'ouverture d'une connexion TCP

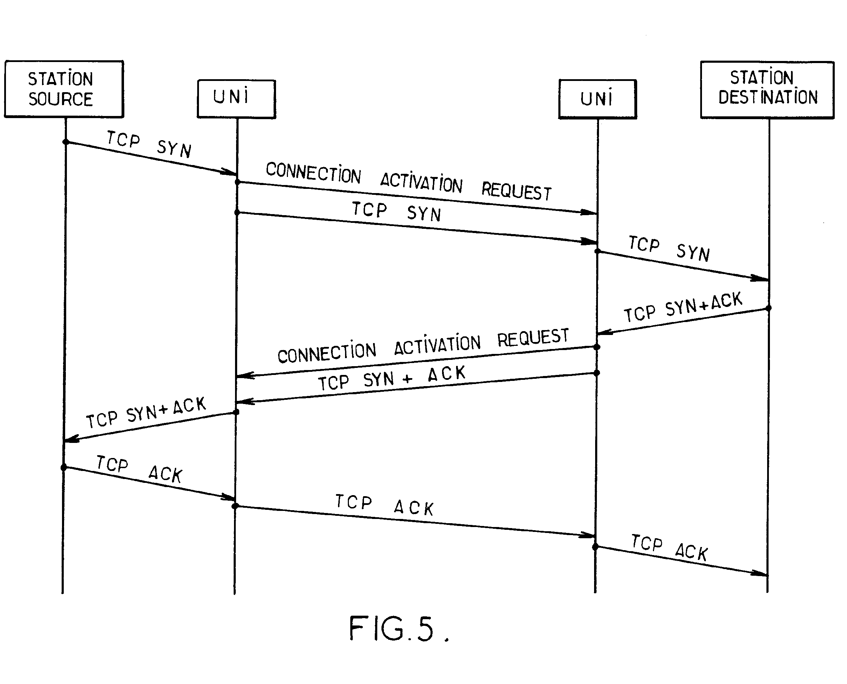

La procédure de réveil de niveau ATM est illustrée par la figure 5. Elle repose sur le traitement de messages mono-cellules portés par des cellules RM. Ces messages sont traités au vol, c'est-à-dire en un temps de cellule ATM, par les dispositifs 8 dont sont équipées les interfaces UNI et par les serveurs RM 22 dont sont équipées les interfaces NNI. De même que TCP, le protocole ASIA établit deux demi-connexions ATM indépendantes.

Lorsque la source miroir 16 située à l'interface UNI où est raccordée la station source détecte l'émission d'un segment SYN dont l'en-tête contient un quadruplet <@IPd, @IPs, Pd, Ps>, elle consulte la mémoire 13 pour déterminer si le segment SYN demande l'établissement d'une connexion avec qualité de service, et lorsque c'est le cas pour identifier la liste des VC susceptibles de supporter cette connexion.

Dans l'exemple précédemment considéré, cette détection peut être fondée sur le nombre de bits de concordance des préfixes. Si ce nombre est inférieur à 80, le protocole ASIA n'est pas employé. Lorsque un triplet <@IPd, @IPs, Pd> de la mémoire 13 est reconnu dans le segment SYN (concordance sur au moins 80 bits), la connexion est à qualité de service de sorte que le protocole ASIA est employé : la source miroir 16 utilise l'adresse de destination @IPd pour rechercher l'ensemble des VC menant à cette adresse. Cette recherche peut consister simplement dans le fait que le résultat de la lecture de la mémoire 13 sur la base du quadruplet <@IPd, @IPs, Pd, Ps> est une tête d'une liste d'identifiants de connexions ATM (VPINCI) à destination du point de sortie du réseau ATM par lequel l'adresse @IPd est accessible. Puis, la source miroir 16 recherche dans cet ensemble de VC une connexion ATM libre. Une fois choisie, la connexion ATM est retirée de la liste des connexions dormantes permettant d'atteindre @IPd, et est ajoutée à la liste des connexions réveillées associées à @IPd. Cette opération peut consister en une mise à jour de la mémoire 13, affectant le VPINCI sélectionné au préfixe de 96 bits correspondant au quadruplet <@IPd, @IPs, Pd, Ps>. Cette entrée ne sera validée qu'une fois la connexion réveillée de bout en bout, et elle sera alors utilisée pour relayer tous les datagrammes de la connexion TCP.

La source miroir 16 initialise un contexte pour cette connexion : état de l'automate, débit actuel, nombre de cellules dans le tampon, quadruplet <@IPs, Ps, @IPd, Pd>. Les paramètres correspondants sont fournis à l'espaceur de cellules 12. Elle arme en outre une temporisation égale à celle de TCP pour l'ouverture de connexion, c'est-à-dire 75 s. Un dispositif de temporisation multiple, tel que par exemple celui décrit dans EP-A-0 504 082, peut être utilisé pour gérer l'ensemble des temporisations.

Une fois le VPI/VCI choisi, une cellule RM portant le message *« Connection Activation Request »* est envoyée sur ce VC par la source miroir 16 afin de réveiller la connexion. Le segment TCP SYN suit, encapsulé dans des cellules ATM transmises sur la même connexion.

Les serveurs RM successivement rencontrés (22 sur les interfaces NNI, et finalement 18 sur l'interface UNI de la destination) vérifient, pour chaque lien du réseau, si le débit ICR demandé dans les octets 8 et 9 de la cellule RM est disponible pour la nouvelle connexion. En cas de succès, la cellule RM est envoyée vers le noeud suivant.

En cas d'échec, dû soit à la non-disponibilité d'un VC dans la source miroir 16, soit à la non-disponibilité du débit ICR demandé dans un noeud du réseau 1, la cellule RM et le segment SYN sont détruits, comme dans le protocole ABT/IT. La source miroir 16 libérera les ressources réservées (ICR et VC) si elle ne voit pas passer le segment ACK correspondant au segment SYN avant la fin de la temporisation globale de 75 s, ce qui permet à TCP de faire ses deux nouvelles tentatives de connexion.

Lorsque la cellule RM atteint le réflecteur 17 dans le LER desservant la station de destination, celui relève le VPINCI sur lequel cette cellule RM est arrivée, et commande sa suppression dans le tampon 21. Lorsqu'il reçoit le segment SYN qui suit sur le même VC, il relève le quadruplet <@IPs, Ps, @IPd, Pd> et le mémorise en association avec le VP/VNCI. Le segment SYN est alors restitué vers la destination.

Le couplage du quadruplet <@IPd, Pd, @IPs, Ps> avec la deuxième demi-connexion ATM n'a lieu que lorsque le segment TCP SYN+ACK contenant le quadruplet <@IPs, Ps, @IPd, Pd> est reçu par la source miroir 16 à laquelle est rattachée la station de destination.

Le segment RESET, qui rompt les deux demi-sens de la connexion TCP par un seul message susceptible d'être envoyé soit par la source soit par la destination, requiert un couplage des deux connexions ATM au niveau des sources miroirs et des réflecteurs afin de libérer toutes les ressources. C'est la dernière opération réalisée au niveau de l'UNI de destination pour l'établissement de connexion : lorsque le segment SYN+ACK est détecté, la source miroir 16 procède comme indiqué précédemment, et elle mémorise en outre une association entre les VPINCI des VC affectés aux deux sens de communication, sur la base du quadruplet <@IPs, Ps, @IPd, Pd> extrait du segment SYN+ACK et du quadruplet correspondant qui a été relevé par le réflecteur 17 dans le segment SYN reçu dans l'autre sens.

Le réflecteur 17 du dispositif 9 sur lequel est raccordé la station source extrait l'identité du VC ATM sur lequel est reçue la deuxième cellule RM « *Connection Activation Request* », ainsi que le quadruplet <@IPs, Ps, @IPd, Pd> porté par le segment TCP SYN+ACK qui suit sur le même VC. La source miroir 16 du même dispositif 9 mémorise le quadruplet <@IPd, Pd, @IPs, Ps>, puis effectue le couplage des deux demi-connexions ATM.

La bande passante globale réservée aux connexions ASIA sur chaque lien emprunté est divisée en deux parties : la capacité élastique et la capacité de réveil. La capacité de réveil est partagée entre les ICR de toutes les routes réveillées. Elle est utilisée par les serveurs RM comme paramètre pour l'acceptation ou le rejet d'une requête de réveil : sur un lien donné, le réveil d'une route est autorisé si la somme des ICR (y compris celui de la route en cours de réveil) est inférieure ou égale à la capacité de réveil. Les serveurs RM peuvent également mettre en oeuvre des algorithmes plus sophistiqués pour traiter les demandes de débit.

L'établissement de connexion effectué comme il vient d'être décrit évite de transporter dans les cellules RM de réveil de l'identifiant complet de la connexion TCP <@IPd, Pd, @IPs, Ps>, soit 12 octets avec un adressage IPv4 et jusqu'à 40 octets avec un adressage IPv6.

Un segment SYN ou SYN+ACK déclenche l'émission d'une cellule RM portant le message « *Connection Activation Request* ». Les sources miroirs mémorisent le VPNC et le quadruplet <@IPd, Pd, @IPs, Ps> lors de la réception du premier segment SYN ou SYN+ACK. En cas de refus de réveil de la connexion, la cellule RM d'activation et le segment TCP sont détruits. Il en résulte que la pile TCP destinataire ne recevra jamais ce segment, et donc ne l'acquittera jamais. La temporisation de la pile TCP émettrice arrivant à échéance entraîne une première retransmission du segment SYN ou du SYN+ACK. Si le segment a été détruit par la source miroir 16 (manque de VC libre), la procédure initiale reprend. Dans le cas contraire, la source miroir ne fait rien puisque cette connexion est déjà réveillée à son niveau. Chaque noeud du réseau qui a accepté cette connexion et réservé un ICR (serveur RM) ne fait rien non plus. La procédure reprend au premier noeud qui a refusé l'appel. On laisse ainsi à TCP la possibilité de finir l'établissement d'appel sans toutefois repartir de zéro et perdre le bénéfice des tentatives antérieures. La deuxième retransmission est traitée de manière identique. C'est seulement à l'issue de la temporisation de 75 s, armée lors du premier segment SYN ou SYN+ACK, que la source miroir 16 libérera les ressources à l'aide du message « *Connection Deactivation Request* » qui sera acquitté par un message « *Connection Deactivation Acknowledge* », comme pour une fin normale de connexion.

### Renégociation du débit durant la connexion TCP

A intervalles réguliers (par exemple environ 4 fois le temps d'aller-retour dans le réseau), une cellule RM est envoyée par la source miroir 16 afin d'ajuster le débit réservé à l'activité de la source.

La source miroir mesure en permanence pour chaque connexion le niveau de remplissage du tampon d'espacement 20. Si le remplissage du tampon excède un seuil haut donné, la source miroir 16 envoie un message « *Elastic Bandwith Request* » pour demander de la bande passante. Au contraire, si le remplissage du tampon est inférieur à un seuil bas donné, la source miroir relâche la bande passante à l'aide du message « *Reduction to ICR Request* ». Le dispositif de temporisation multiple décrit dans EP-A-0 504 082 peut également être utilisé.

### Mise en sommeil d'un VC ATM à la fermeture d'une connexion TCP

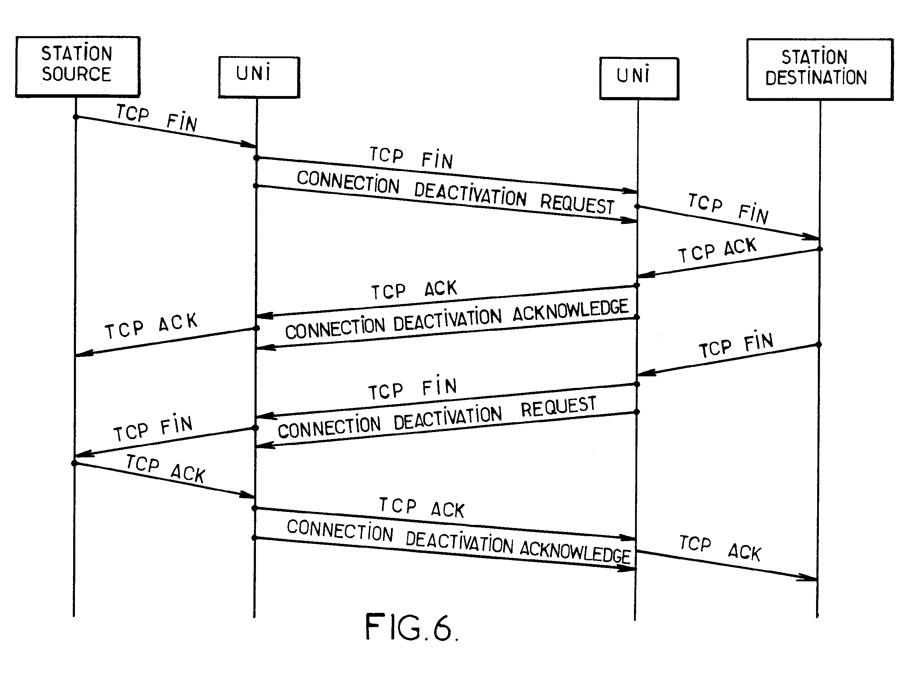

La fermeture du VC ATM (figure 6) est effectuée indépendamment sur chaque sens de la connexion TCP, et est initialisée par la détection d'un message TCP FIN.

Lorsque la source miroir 16 détecte l'émission d'un segment FIN émis par <@IPs, Ps> à destination de <@IPd, Pd>, elle émet, à la suite de ce segment FIN, une cellule RM « *Connection Deactivation Request* » sur le sens aller.

Cette requête provoque, sur le sens aller, la libération du débit éventuellement réservé ainsi que le débit ICR, et entraîne le passage des noeuds (y compris la source miroir) à l'état d'attente de l'acquittement de désactivation correspondant provenant du sens retour. Après avoir reçu le message « *Connection Deactivation Acknowledge* », la source miroir remet le VC ATM de la connexion TCP dans l'ensemble des VC libres à destination de @IPd.

Pour désactiver le sens retour, une procédure symétrique est lancée par la source miroir destination, suite à la détection du segment FIN émis par <@IPd, Pd> à destination de <@IPs, Ps>.

Dans le cas d'une fermeture non simultanée au niveau TCP (entraînant par conséquent une désactivation non simultanée au niveau ATM), la source miroir, qui n'a plus un VC ATM particulier pour la connexion TCP considérée, reçoit néanmoins des segments d'acquittement (ACK) en provenance de <@IPs, Ps>, à destination de <@IPd, Pd>. La source miroir, une fois le VC ATM libéré, change le couplage du quadruplet <@IPd, Pd, @IPs, Ps> pour lui affecter un VC ATM de routage par défaut à destination de la source miroir de destination. Chaque connexion TCP pour laquelle la demi-connexion ATM à destination d'un point de sortie donné a été libéré, a ainsi ses segments ACK transmis sur le VC ATM par défaut à destination de ce point de sortie donné. A l'initialisation du réseau, le protocole ASIA réserve un VC, dans l'ensemble de VC configuré par LDP, en tant que VC ATM par défaut à destination des différents points de sortie possibles.

### Fermeture abortive et refus d'ouverture

Ces deux procédures reposent sur l'émission d'un message TCP de type RESET provoquant la fermeture immédiate de la connexion TCP.

Dans le cas d'une fermeture abortive, l'une des deux stations prend l'initiative de forcer la fermeture de la connexion TCP, alors qu'un échange de données est en cours, en émettant un segment RESET.

Le refus d'ouverture a lieu lorsqu'une station cherche à ouvrir une connexion avec un port distant inexistant. La station destination répond alors par un RESET qui a pour effet d'interrompre la tentative d'ouverture.

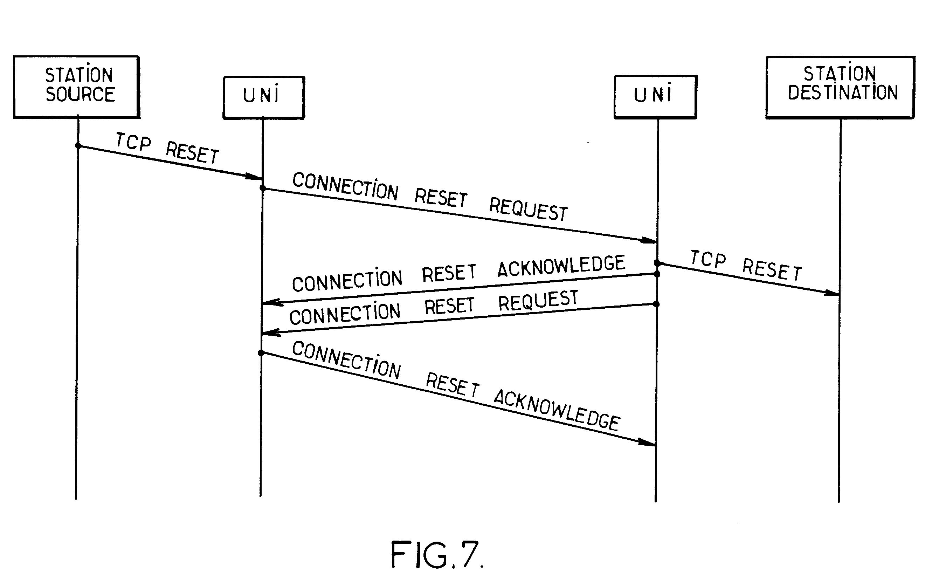

Une telle interruption de connexion TCP (figure 7) peut être traduite au niveau ATM à l'aide de l'émission d'un message ASIA « *Connection Reset Request* » demandant la fermeture des deux sens de la connexion par la source miroir détectant l'émission d'un segment TCP RESET. Cette requête est émise à la suite du segment RESET, quelque soit l'état dans lequel se trouve la station émettrice du segment RESET. Lorsque le module 10 à l'autre extrémité reçoit le message « *Connection Reset Request* », il répond par un message « *Connection Reset Acknowledge* », et émet à son tour sur l'autre demi-connexion ATM (obtenue grâce au couplage des deux demi-connexions) une primitive « *Connection Reset Request* ». Lorsqu'un module 10 reçoit le message « *Connection Reset Acknowledge* », il libère le VC ATM et efface le couplage. A la suite d'un segment RESET, plus aucun segment TCP ne sera échangé sur cette connexion, de sorte qu'il n'y a pas lieu de modifier le couplage pour utiliser un VC ATM par défaut comme dans le cas de la fermeture par segment FIN.

### Quelques variantes de réalisation possibles

Lors de l'établissement d'une connexion TCP, la requête TCP SYN pourrait être stockée dans une file associée à la connexion ATM en attendant que la procédure de réveil de la connexion ATM soit terminée. La méthode précédemment présentée a toutefois l'avantage de minimiser la durée de l'établissement de la connexion.

L'ouverture de la connexion peut être déclenchée uniquement par le segment TCP SYN. Le message « *Connection Activation Request* » ouvre alors une connexion bidirectionnelle pour les deux demi-connexions TCP simultanément. Un mécanisme de comptabilisation du nombre de noeuds traversés doit alors être ajouté pour pouvoir départager deux éventuelles demandes d'ouverture simultanées progressant en sens inverse sur le même VP/VC. On peut aussi attribuer les VPNC de façon dépendante du sens d'ouverture de la connexion.

La fermeture de la connexion peut également se dérouler en deux temps. Dans ce cas, la connexion passe d'abord à l'état dormant (le VC est toujours actif, mais le débit réservé vaut ICR et ne peut plus augmenter) lors de la réception du segment FIN. La connexion sera rompue (VC et ICR libérés) lorsque la source miroir qui a reçu le premier segment FIN reçoit l'acquittement de la source miroir opposée. Si cette solution oblige à mémoriser les messages FIN, elle permet de s'affranchir du VC par défaut nécessaire au transport des acquittements.

Le couplage peut s'effectuer en transportant dans la cellule RM d'activation le quadruplet <@IPs, Ps, @IPd, Pd>, ce qui évite au réflecteur de décoder les segments TCP SYN et SYN+ACK.

Le procédé selon l'invention peut s'appliquer à des protocoles autres que TCP, notamment à des protocoles en mode connecté employés au-dessus d'UDP (par exemple RTP).

Si le procédé est appliqué à la fois à des connexions TCP et à des connexions utilisant UDP dans une couche de protocole intermédiaire, l'affectation des VC ATM peut se faire sur la base d'un quintuplet, un identifiant du protocole en mode connecté étant ajouté au quadruplet <@IPs, Ps, @IPd, Pd>.

De manière générale, l'invention apporte une solution pour le couplage de l'ATM avec un ou plusieurs protocoles en mode connecté de couche supérieure, transporté par au moins une couche intermédiaire en mode non connecté.

## Revendications

1. Procédé de transmission sur un réseau ATM (1) de flux de données générés selon un protocole de transport en mode connecté et formatés en paquets selon un protocole de réseau en mode non-connecté, chaque paquet incluant une adresse de source et une adresse de destination, le procédé comprenant les étapes suivantes:
- attribuer au préalable un ensemble de circuits virtuels du réseau ATM à chaque couple de points d'accès du réseau ATM, sans affecter de ressources de débit auxdits circuits virtuels ;
- à réception par un premier point d'accès du réseau ATM d'une requête d'ouverture de connexion, formulée selon ledit protocole en mode connecté, entre une adresse de source et une adresse de destination accessible par un second point d'accès du réseau ATM, sélectionner un circuit virtuel disponible dans l'ensemble attribué au couple formé par lesdits premier et second points d'accès du réseau ATM, et émettre sur le circuit virtuel sélectionné une cellule ATM de gestion de ressources contenant un message de demande d'activation du circuit virtuel sélectionné ;
- à réception de ladite cellule ATM de gestion de ressources par un noeud du réseau ATM se trouvant sur le circuit virtuel sélectionné, affecter une ressource de débit, si elle est disponible, au circuit virtuel sélectionné.

2. Procédé selon la revendication 1, dans lequel le message de demande d'activation comporte une indication de ressource de débit requise pour la connexion.

3. Procédé selon la revendication 2, dans lequel la ressource de débit indiquée dans le message de demande d'activation représente un débit de référence sur la connexion, et dans lequel des cellules ATM de gestion de ressources contenant des messages de réglage du débit par rapport au débit de référence sont émises sur le circuit virtuel sélectionné par le premier point d'accès du réseau ATM, et acquittées sur le circuit virtuel sélectionné par le second point d'accès du réseau ATM.

4. Procédé selon l'une quelconque des revendications précédentes, dans lequel l'émission de la cellule ATM de gestion de ressources contenant le message de demande d'activation est immédiatement suivie par l'émission sur le circuit virtuel sélectionné d'au moins une cellule ATM portant ladite requête d'ouverture de connexion.

5. Procédé selon la revendication 4, dans lequel chaque cellule ATM suivant le message de demande d'activation sur le circuit virtuel sélectionné et portant ladite requête d'ouverture de connexion est détruite par un noeud du réseau ATM se trouvant sur le circuit virtuel sélectionné lorsque la ressource de débit à affecter au circuit virtuel sélectionné n'est pas disponible.

6. Procédé selon la revendication 5, comprenant les étapes suivantes:
- déclencher une temporisation au niveau du premier point d'accès du réseau ATM (1), au moment de l'émission de la cellule ATM de gestion de ressources contenant le message de demande d'activation ;
- si aucun acquittement de ladite requête d'ouverture de connexion portée par au moins une cellule ATM suivant le message de demande d'activation sur le circuit virtuel sélectionné n'est reçue du second point d'accès du réseau ATM par le premier point d'accès du réseau ATM avant l'expiration de la temporisation, émettre sur le circuit virtuel sélectionné une cellule ATM de gestion de ressources contenant un message de demande de désactivation du circuit virtuel sélectionné.

7. Procédé selon la revendication 6, dans lequel ladite temporisation a une durée correspondant à celle d'une temporisation de retransmission prévue dans ledit protocole de transport en mode connecté.

8. Procédé selon la revendication 6 ou 7, comprenant les étapes suivantes :
- si une répétition de la requête d'ouverture de connexion est reçue par le premier point d'accès depuis l'adresse de source avant de recevoir du second point d'accès du réseau ATM un acquittement de ladite requête d'ouverture de connexion, réémettre sur le circuit virtuel sélectionné au moins une cellule ATM portant ladite requête d'ouverture de connexion ;
- à réception de la cellule ATM réémise portant ladite requête d'ouverture de connexion, par un noeud du réseau ATM ayant détruit la cellule ATM suivant le message de demande d'activation sur le circuit virtuel sélectionné et portant ladite requête d'ouverture de connexion, affecter une ressource de débit, si elle est disponible, au circuit virtuel sélectionné.

9. Procédé selon l'une quelconque des revendications précédentes, dans lequel des ressources de débit sont affectées à deux circuits virtuels ATM distincts pour deux sens de communication opposés entre les premier et second points d'accès.

10. Dispositif d'interface (9) pour un point premier d'accès situé à une interface utilisateur-réseau d'un réseau ATM (1), pour transmettre sur ledit réseau ATM des flux de données générés selon un protocole de transport en mode connecté et formatés en paquets selon un protocole de réseau en mode non-connecté, chaque paquet incluant une adresse de source et une adresse de destination, le dispositif comprenant:
- des moyens pour attribuer au préalable un ensemble de circuits virtuels du réseau ATM à au moins un couple formé par ledit premier point d'accès du réseau ATM et un second point d'accès du réseau ATM, sans affecter de ressources de débit auxdits circuits virtuels ;
- des moyens de sélection d'un circuit virtuel disponible dans l'ensemble attribué au couple formé par lesdits premier et second points d'accès du réseau ATM, en réponse à la réception d'une requête d'ouverture de connexion, formulée selon ledit protocole en mode connecté, entre une adresse de source et une adresse de destination accessible par le second point d'accès ;
- des moyens d'émission, sur le circuit virtuel sélectionné, d'une cellule ATM de gestion de ressources contenant un message de demande d'activation du circuit virtuel sélectionné et d'affectation de ressources de débit au circuit virtuel sélectionné.

11. Dispositif d'interface selon la revendication 10, dans lequel le message de demande d'activation indique une ressource de débit représentant un débit de référence sur la connexion, et les moyens d'émission (10) sont agencés pour émettre sur le circuit virtuel sélectionné des cellules ATM de gestion de ressources contenant des messages de réglage du débit par rapport au débit de référence.

12. Dispositif d'interface selon la revendication 10 ou 11, dans lequel les moyens d'émission (10) sont agencés pour émettre sur le circuit virtuel sélectionné, immédiatement après la cellule ATM de gestion de ressources contenant le message de demande d'activation, au moins une cellule ATM portant ladite requête d'ouverture de connexion.

13. Dispositif d'interface selon la revendication 12, comprenant en outre:
- des moyens pour déclencher une temporisation au moment de l'émission de la cellule ATM de gestion de ressources contenant le message de demande d'activation ;
- des moyens pour émettre sur le circuit virtuel sélectionné une cellule ATM de gestion de ressources contenant un message de demande de désactivation du circuit virtuel sélectionné, si aucun acquittement de ladite requête d'ouverture de connexion portée par au moins une cellule ATM suivant le message de demande d'activation sur le circuit virtuel sélectionné n'est reçue avant l'expiration de la temporisation.

14. Dispositif d'interface selon la revendication 13, dans lequel ladite temporisation a une durée correspondant à celle d'une temporisation de retransmission prévue dans ledit protocole de transport en mode connecté.

15. Dispositif d'interface selon la revendication 13 ou 14, comprenant en outre:
- des moyens pour réémettre sur le circuit virtuel sélectionné au moins une cellule ATM portant ladite requête d'ouverture de connexion si une répétition de la requête d'ouverture de connexion est reçue depuis l'adresse de source avant de recevoir un acquittement de ladite requête d'ouverture de connexion.

16. Dispositif d'interface selon l'une quelconque des revendications 10 à 15, comprenant des moyens pour affecter des ressources de débit à deux circuits virtuels ATM distincts pour deux sens de communication opposés entre les premier et second points d'accès.
